(19) Europäisches Patentamt
European Patent Office
Office européen des brevets

(11) EP 3 228 663 A1

(12) EUROPEAN PATENT APPLICATION
published in accordance with Art. 153(4) EPC

(43) Date of publication:
**11.10.2017 Bulletin 2017/41**

(21) Application number: **15866303.9**

(22) Date of filing: **27.11.2015**

(51) Int Cl.:
***C08L 27/12*** (2006.01) ***B29C 33/00*** (2006.01)
***B29C 35/02*** (2006.01) ***C08K 3/04*** (2006.01)
***C08K 5/14*** (2006.01) ***C08L 91/00*** (2006.01)

(86) International application number:
**PCT/JP2015/083472**

(87) International publication number:
**WO 2016/088685 (09.06.2016 Gazette 2016/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.12.2014 JP 2014244142**

(71) Applicants:
- **Daikin Industries, Ltd.**
  **Osaka-shi, Osaka 530-8323 (JP)**
- **Bridgestone Corporation**
  **Tokyo 104-8340 (JP)**

(72) Inventors:
- **UEDA, Akinori**
  **Osaka-shi**
  **Osaka 530-8323 (JP)**
- **OTA, Daisuke**
  **Osaka-shi**
  **Osaka 530-8323 (JP)**
- **ARAI, Masashi**
  **Osaka-shi**
  **Osaka 530-8323 (JP)**
- **MINATO, Takakazu**
  **Kodaira-shi**
  **Tokyo 187-8531 (JP)**

(74) Representative: **Hoffmann Eitle**
**Patent- und Rechtsanwälte PartmbB**
**Arabellastraße 30**
**81925 München (DE)**

# (54) FLUORINE RUBBER COMPOSITION AND CROSS-LINKED FLUORINE RUBBER

(57) The invention provides a fluorine rubber composition capable of providing a cross-linked fluorine rubber which has a high tensile elongation at break and a low hardness. The fluorine rubber composition contains fluorine rubber, carbon black, at least one compound (A) selected from the group consisting of fatty oils and aliphatic hydrocarbons, and a peroxide cross-linker. The carbon black has a nitrogen adsorption specific surface area ($N_2SA$) of 25 to 180 $m^2/g$. The compound (A) has a boiling point at atmospheric pressure of 250°C or higher and a melting point or a freezing point of 15°C or lower.

FIG.1

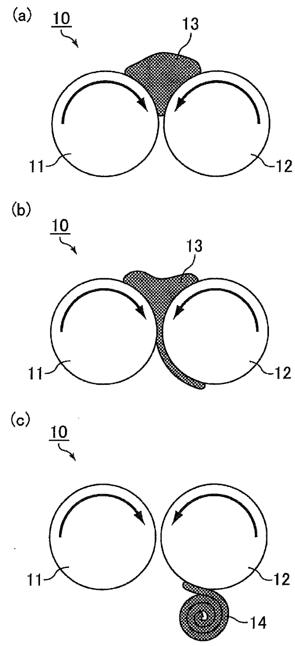


EP 3 228 663 A1

## Description

TECHNICAL FIELD

The present invention relates to fluorine rubber compositions and cross-linked fluorine rubbers.

BACKGROUND ART

Fluorine rubber is known to have excellent chemical resistance, oil resistance, and heat resistance, as well as good compression-set resistance at high temperature. Additionally, those skilled in the art have desired improvement in mechanical properties at high temperature, such as strength under heating and elongation under heating. For example, in the case of using a cross-linked fluorine rubber in a high-temperature environment exceeding 100°C, the rubber needs to exhibit excellent durability, i.e., not only excellent heat resistance but also excellent mechanical properties even at high temperature.

In order to minimize the compression set, for example, Patent Literature 1 proposes a composition. Still, this composition has a low elongation at room temperature, and thus the elongation under heating is expected to be lower. Patent Literature 2 discloses improvement in elongation under heating. Still, the product disclosed therein does not have sufficient physical properties to endure more severe conditions. Patent Literature 3 discloses, as one example of improvement in strength under heating, combination of fluorine rubber and a fluorine-containing thermoplastic elastomer. Still, this combination has a low elongation at room temperature, and thus the elongation under heating is expected to be lower.

Then, Patent Literature 4 proposes a fluorine rubber composition which can provide a cross-linked product having excellent mechanical properties even at high temperature. This fluorine rubber composition contains a peroxide-cross-linkable fluorine rubber (A) and, for each 100 parts by mass of the peroxide-cross-linkable fluorine rubber (A), 5 to 50 parts by mass of carbon black (B), 0.01 to 10 parts by mass of a peroxide-cross-linking cross-linker (C), and 2.5 parts by mass or less of a low self-polymerizable cross-linking accelerator (D).

CITATION LIST

- Patent Literature

Patent Literature 1: JP S60-55050 A
Patent Literature 2: JP 2008-184496 A
Patent Literature 3: JP H06-25500 A
Patent Literature 4: WO 2012/026554

SUMMARY OF INVENTION

- Technical Problem

Conventional techniques fail to provide cross-linked fluorine rubbers having a low hardness even though they can achieve a high tensile elongation at break. In contrast, conventional techniques fail to achieve a high tensile elongation at break when they lower the hardness.

In consideration of the above state of the art, the present invention aims to provide a fluorine rubber composition capable of providing a cross-linked fluorine rubber which has a high tensile elongation at break even at high temperature and a low hardness. The present invention also aims to provide a cross-linked fluorine rubber which has a high tensile elongation at break even at high temperature and a sufficiently low hardness.

- Solution to Problem

In order to solve the above problems, the inventors have performed various studies on the formulation of a fluorine rubber composition. Then, they found that blending of fluorine rubber with carbon black, a cross-linker, and a fatty oil or an aliphatic hydrocarbon, each of which is selected from very limited types thereof, can lead to a cross-linked fluorine rubber having not only a high tensile elongation at break but also a sufficiently low hardness, thereby completing the present invention.

In other words, the present invention relates to a fluorine rubber composition containing: fluorine rubber; carbon

black; at least one compound (A) selected from the group consisting of fatty oils and aliphatic hydrocarbons; and a peroxide cross-linker, the carbon black having a nitrogen adsorption specific surface area ($N_2SA$) of 25 to 180 $m^2/g$, the compound (A) having a boiling point at atmospheric pressure of 250°C or higher and a melting point or freezing point of 15°C or lower.

In the fluorine rubber composition of the present invention, the fatty oils are each preferably at least one selected from the group consisting of nondrying oils and semidrying oils.

In the fluorine rubber composition of the present invention, the compound (A) is preferably present in an amount of 1 to 30 parts by mass relative to 100 parts by mass of the fluorine rubber.

In the fluorine rubber composition of the present invention, the carbon black is preferably present in an amount of 5 to 65 parts by mass relative to 100 parts by mass of the fluorine rubber.

The present invention also relates to a cross-linked fluorine rubber comprising fluorine rubber, which has a tensile elongation at break of 500% or higher at 170°C and a hardness of 80 or lower at 25°C.

The cross-linked fluorine rubber of the present invention preferably has a coefficient of kinetic friction of 2.2 or lower at 170°C.

The cross-linked fluorine rubber of the present invention is preferably obtainable from a fluorine rubber composition containing fluorine rubber, carbon black, at least one compound (A) selected from the group consisting of fatty oils and aliphatic hydrocarbons, and a peroxide cross-linker.

In the cross-linked fluorine rubber of the present invention, the fatty oils are each preferably at least one selected from the group consisting of nondrying oils and semidrying oils.

In the cross-linked fluorine rubber of the present invention, the compound (A) is preferably present in an amount of 1 to 30 parts by mass relative to 100 parts by mass of the fluorine rubber.

In the cross-linked fluorine rubber of the present invention, the carbon black is preferably present in an amount of 5 to 65 parts by mass relative to 100 parts by mass of the fluorine rubber.

The cross-linked fluorine rubber of the present invention is preferably obtainable from the above fluorine rubber composition.

The cross-linked fluorine rubber of the present invention is preferably a bladder for tire vulcanization.

- Advantageous Effects of Invention

Since the fluorine rubber composition of the present invention has the aforementioned configuration, it is capable of providing a cross-linked fluorine rubber which has a high tensile elongation at break even at high temperature and a low hardness. The cross-linked fluorine rubber of the present invention has a high tensile elongation at break even at high temperature and a sufficiently low hardness.

## BRIEF DESCRIPTION OF THE DRAWINGS

Fig. 1 is a schematic view of a kneading method in Step (3-1) and Step (3-2).
Fig. 2 is a schematic view of one example of the shape of a primer bulb.

## DESCRIPTION OF EMBODIMENTS

The present invention will be specifically described hereinbelow.

The fluorine rubber composition of the present invention contains fluorine rubber, carbon black, a compound (A), and a peroxide cross-linker.

The fluorine rubber preferably contains a structural unit derived from at least one monomer selected from the group consisting of tetrafluoroethylene (TFE), vinylidene fluoride (VdF), and perfluoroethylenic unsaturated compound (e.g., hexafluoropropylene (HFP), perfluoro(alkyl vinyl ether) (PAVE)) represented by the following formula (1):

$$CF_2=CF-R_f^a \qquad (1)$$

wherein $R_f^a$ is $-CF_3$ or $-OR_f^b$, where $R_f^b$ is a C1-C5 perfluoroalkyl group.

Examples of the fluorine rubber include vinylidene fluoride (VdF)-based fluorine rubber, tetrafluoroethylene (TFE)/propylene (Pr)-based fluorine rubber, tetrafluoroethylene (TFE)/propylene (Pr)/vinylidene fluoride (VdF)-based fluorine rubber, ethylene (Et)/hexafluoropropylene (HFP)-based fluorine rubber, ethylene (Et)/hexafluoropropylene (HFP)/vinylidene fluoride (VdF)-based fluorine rubber, ethylene (Et)/hexafluoropropylene (HFP)/tetrafluoroethylene (TFE)-based fluorine rubber, fluorosilicone-based fluorine rubber, and fluorophosphazene-based fluorine rubber. These

rubbers may be used alone or in any combination to the extent that the effects of the present invention are not impaired. For good heat-aging resistance and oil resistance, preferred among these are VdF-based fluorine rubber, TFE/Pr-based fluorine rubber, and TFE/Pr/VdF-based fluorine rubber.

The amount of the VdF repeating unit in the VdF-based fluorine rubber is preferably 20 mol% or more, more preferably 40 mol% or more, still more preferably 45 mol% or more, further more preferably 50 mol% or more, particularly preferably 55 mol% or more, most preferably 60 mol% or more, relative to the sum of the moles of the VdF repeating unit and a different repeating unit derived from a different comonomer. The amount of the VdF repeating unit is also preferably 90 mol% or less, more preferably 85 mol% or less, still more preferably 80 mol% or less, further more preferably 78 mol% or less, particularly preferably 75 mol% or less, most preferably 70 mol% or less, relative to the sum of the moles of the VdF repeating unit and the different repeating unit derived from a different comonomer.

The amount of the different repeating unit derived from a different comonomer is preferably 10 mol% or more, more preferably 15 mol% or more, still more preferably 20 mol% or more, further more preferably 22 mol% or more, particularly preferably 25 mol% or more, most preferably 30 mol% or more, relative to the sum of the moles of the VdF repeating unit and the different repeating unit derived from a different comonomer. The amount of the different repeating unit derived from a different comonomer is also preferably 80 mol% or less, more preferably 60 mol% or less, still more preferably 55 mol% or less, further more preferably 50 mol% or less, particularly preferably 45 mol% or less, most preferably 40 mol% or less, relative to the sum of the moles of the VdF repeating unit and the different repeating unit derived from a different comonomer.

The different comonomer in the above VdF-based fluorine rubber may be any comonomer copolymerizable with VdF, and examples thereof include fluorine-containing monomers such as TFE, HFP, PAVE, chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, and a fluorine-containing monomer represented by the following formula (2) :

$$CH_2{=}CFR_f \qquad (2)$$

(wherein $R_f$ is a linear or branched C1-C12 fluoroalkyl group); fluorine-free monomers such as ethylene (Et), propylene (Pr), and alkyl vinyl ethers; monomers providing a cross-linkable group (cure site); and reactive emulsifiers. These monomers and compounds may be used alone or in combination of two or more.

The PAVE is more preferably perfluoro(methyl vinyl ether)(PMVE) or perfluoro(propyl vinyl ether) (PPVE), particularly preferably PMVE.

The PAVE may also be a perfluorovinyl ether represented by the formula: $CF_2{=}CFOCF_2OR_f^c$ (wherein $R_f^c$ is a linear or branched C1-C6 perfluoroalkyl group, a cyclic C5-C6 perfluoroalkyl group, or a linear or branched C2-C6 perfluorooxyalkyl group having 1 to 3 oxygen atom(s)), and is preferably $CF_2{=}CFOCF_2OCF_3$, $CF_2{=}CFOCF_2OCF_2CF_3$, or $CF_2{=}CFOCF_2OCF_2CF_2OCF_3$, for example.

The fluorine-containing monomer (2) represented by the formula (2) is preferably a monomer wherein $R_f$ is a linear fluoroalkyl group, more preferably a monomer wherein $R_f$ is a linear perfluoroalkyl group. The carbon number of $R_f$ is preferably 1 to 6. Examples of the fluorine-containing monomer (2) represented by the formula (2) include $CH_2{=}CFCF_3$, $CH_2{=}CFCF_2CF_3$, $CH_2{=}CFCF_2CF_2CF_3$, and $CH_2{=}CFCF_2CF_2CF_2CF_3$. Preferred is 2,3,3,3-tetrafluoropropylene represented by $CH_2{=}CFCF_3$.

The TFE/propylene (Pr)-based fluorine rubber herein means a fluorine-containing copolymer containing 45 to 70 mol% of TFE and 55 to 30 mol% of propylene (Pr). In addition to these two components, the rubber may contain 0 to 40 mol% of a specific third component (e.g., PAVE).

The ethylene (Et)/HFP-based copolymer preferably satisfies an Et/HFP ratio of (35 to 80)/(65 to 20) (mol%), more preferably (40 to 75)/(60 to 25) (mol%).

The Et/HFP/TFE-based copolymer preferably satisfies an Et/HFP/TFE ratio of (35 to 75)/(25 to 50)/(0 to 15) (mol%), more preferably (45 to 75)/(25 to 45)/(0 to 10) (mol%).

In order to achieve a better tensile elongation at break and lower hardness, the fluorine rubber is preferably a bipolymer consisting only of a VdF unit and a HFP unit, a polymerized unit derived from the fluorine-containing monomer (2) represented by the formula (2), or a PAVE unit. In other words, the fluorine rubber is preferably at least one bipolymer selected from the group consisting of VdF/HFP copolymers, VdF/fluorine-containing monomer (2) represented by the formula (2) copolymers, and VdF/PAVE copolymers.

The fluorine rubber is more preferably at least one bipolymer selected from the group consisting of VdF/HFP copolymers, VdF/2,3,3,3-tetrafluoropropylene copolymers, and VdF/PAVE copolymers, particularly preferably at least one bipolymer selected from the group consisting of VdF/HFP copolymers and VdF/2,3,3,3-tetrafluoropropylene copolymers.

The fluorine rubber preferably has a number average molecular weight Mn of 5000 to 500000, more preferably 10000 to 500000, still more preferably 20000 to 500000.

In order to reduce the viscosity of the fluorine rubber composition, for example, another fluorine rubber may be blended. Examples of this different fluorine rubber include low-molecular-weight liquid fluorine rubber (number average molecular weight: 1000 or higher), low-molecular-weight fluorine rubber with an approximate number average molecular weight of 10000, and fluorine rubber with an approximate number average molecular weight of 100000 to 200000.

For good processability, the fluorine rubber preferably has a Mooney viscosity within a range of 20 to 200, more preferably 30 to 180, at 100°C. The Mooney viscosity is measured in conformity with JIS K6300.

The aforementioned examples of the fluorine rubber constitute the principal monomer. Any monomer giving a peroxide-cross-linkable group may be copolymerized to the extent that the effects of the present invention are not impaired.

The monomer giving a peroxide-cross-linkable group may be any monomer that can introduce a peroxide-cross-linkable group as appropriate in accordance with, for example, the production method. Examples thereof include known polymerizable compounds containing an iodine atom and chain-transfer agents.

Preferred examples of the monomer giving a peroxide-cross-linkable group include compounds represented by the following formula (3):

$CY^1_2=CY^2R_f^2-X^1$ (3)

wherein $Y^1$ and $Y^2$ are each a fluorine atom, a hydrogen atom, or $-CH_3$; $R_f^2$ is a linear or branched fluorine-containing alkylene group which may contain one or more ether bonds, which may contain an aromatic ring, and in which part or all of the hydrogen atoms is/are replaced by a fluorine atom(s); and $X^1$ is an iodine atom.

Specific examples thereof include iodine-containing monomers represented by the following formula (4):

$CY^1_2=CY^2R_f^3CHR^1-X^1$ (4)

(wherein $Y^1$, $Y^2$, and $X^1$ are defined in the same manner as mentioned above; $R_f^3$ is a linear or branched fluorine-containing alkylene group which may contain one or more ether bonds and in which part or all of the hydrogen atoms is/are replaced by a fluorine atom(s), that is, a linear or branched fluorine-containing alkylene group in which part or all of the hydrogen atoms is/are replaced by a fluorine atom(s), a linear or branched fluorine-containing oxyalkylene group in which part or all of the hydrogen atoms is/are replaced by a fluorine atom(s), or a linear or branched fluorine-containing polyoxyalkylene group in which part or all of the hydrogen atoms is/are replaced by a fluorine atom(s); and $R^1$ is a hydrogen atom or a methyl group); and iodine-containing monomers represented by any of the following formulas (5) to (22):

$CY^4_2=CY^4(CF_2)_n-X^1$ (5)

(wherein $Y^4$s are the same as or different from each other, and are each a hydrogen atom or a fluorine atom; and n is an integer of 1 to 8);

$CF_2=CFCF_2R_f^4-X^1$ (6)

(wherein $R_f^4$ is

$-(OCF_2)_n-$ or $-(OCF(CF_3))_n-$ ;

and n is an integer of 0 to 5);

$CF_2=CFCF_2(OCF(CF_3)CF_2)_m(OCH_2CF_2CF_2)_nOCH_2CF_2-X^1$ (7)

(wherein m is an integer of 0 to 5; and n is an integer of 0 to 5);

$CF_2=CFCF_2(OCH_2CF_2CF_2)_m(OCF(CF_3)CF_Z)_nOCF(CF_3)-X^1$ (8)

(wherein m is an integer of 0 to 5; and n is an integer of 0 to 5);

$CF_2=CF(OCF_2CF(CF_3))_mO(CF_2)_n-X^1$ (9)

(wherein m is an integer of 0 to 5; and n is an integer of 1 to 8);

$CF_2=CF(OCF_2CF(CF_3))m-X^1$ (10)

(wherein m is an integer of 1 to 5);

$CF_2=CFOCF_2(CF(CF_3)OCF_2)_nCF(-X^1)CF_3$ (11)

(wherein n is an integer of 1 to 4);

$CF_2=CFO(CF_2)_nOCF(CF_3)-X^1$ (12)

(wherein n is an integer of 2 to 5);

$CF_2=CFO(CF_2)_n-(C_6H_4)-X^1$ (13)

(wherein n is an integer of 1 to 6);

$CF_2=CF(OCF_2CF(CF_3))_nOCF_2CF(CF_3)-X^1$ (14)

(wherein n is an integer of 1 to 2);

$CH_2=CFCF_2O(CF(CF_3)CF_2O)_nCF(CF_3)-X^1$ (15)

(wherein n is an integer of 0 to 5);

$CF_2=CFO(CF_2CF(CF_3)O)_m(CF_2)_n-X^1$ (16)

(wherein m is an integer of 0 to 5; and n is an integer of 1 to 3);

$CH_2=CFCF_2OCF(CF_3)OCF(CF_3)-X^1$ (17)

$CH_2=CFCF_2OCH_2CF_2-X^1$ (18)

$CF_2=CFO(CF_2CF(CF_3)O)_mCF_2CF(CF_3)-X^1$ (19)

(wherein m is an integer of 0 or greater);

$CF_2=CFOCF(CF_3)CF_2O(CF_2)_n-X^1$ (20)

(wherein n is an integer of 1 or greater); and

$CF_2=CFOCF_2OCF_2CF(CF_3)OCF_2-X^1$ (21)

$CH_2=CH-(CF_2)_nX^1$ (22)

(wherein n is an integer of 2 to 8).

In the formulas (5) to (22), $X^1$ is defined in the same manner as mentioned above. These monomers may be used alone or in any combination.

A preferred example of the iodine-containing monomer represented by the formula (4) is an iodine-containing fluorinated vinyl ether represented by the following formula (23):

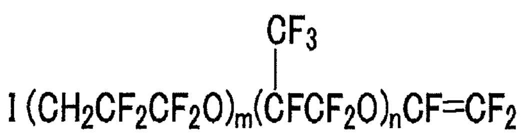

(23)

wherein m is an integer of 1 to 5; and n is an integer of 0 to 3.

More specific examples thereof include those represented by the following formulas.

[Chem. 3]

$ICH_2CF_2CF_2OCF=CF_2$、 $I(CH_2CF_2CF_2O)_2CF=CF_2$、

$I(CH_2CF_2CF_2O)_3CF=CF_2$、

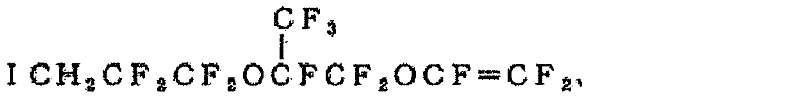

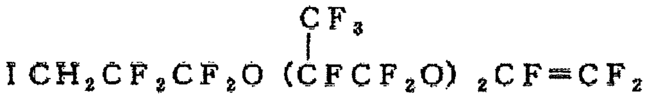

Preferred among these is $ICH_2CF_2CF_2OCF=CF_2$.

More specific, preferred examples of the iodine-containing monomer represented by the formula (5) include $ICF_2CF_2CF=CH_2$ and $I(CF_2CF_2)_2CF=CH_2$.

A more specific, preferred example of the iodine-containing monomer represented by the formula (9) is $I(CF_2CF_2)_2OCF=CF_2$.

More specific, preferred examples of the iodine-containing monomer represented by the formula (22) include $CH_2=CHCF_2CF_2I$ and $I(CF_2CF_2)_2CH=CH_2$.

For good cross-linkability, the fluorine rubber is preferably a fluorine rubber containing an iodine atom and/or bromine atom as a cross-linking point(s). The amount of the iodine atom and/or bromine atom is preferably 0.001 to 10 mass%, more preferably 0.01 to 5 mass%, particularly preferably 0.01 to 3 mass%.

The fluorine rubber composition contains carbon black having a nitrogen adsorption specific surface area ($N_2SA$) of 25 to 180 $m^2/g$.

Examples of the carbon black include furnace black, acetylene black, thermal black, channel black, and graphite, classified from the viewpoint of the production methods. From the viewpoint of the use, mention may be made to all of the carbon blacks commercially available as rubber carbon black, color carbon black, or conductive carbon black. Specific examples of the rubber carbon black include SAF-HS ($N_2SA$: 142 $m^2/g$, DBP: 130 ml/100 g), SAF ($N_2SA$: 142 $m^2/g$, DBP: 115 ml/100 g), N234 ($N_2SA$: 126 $m^2/g$, DBP: 125 ml/100 g), ISAF ($N_2SA$: 119 $m^2/g$, DBP: 114 ml/100 g), ISAF-LS ($N_2SA$: 106 $m^2/g$, DBP: 75 ml/100 g), ISAF-HS ($N_2SA$: 99 $m^2/g$, DBP: 129 ml/100 g), N339 ($N_2SA$: 93 $m^2/g$, DBP: 119 ml/100 g), HAF-LS ($N_2SA$: 84 $m^2/g$, DBP: 75 ml/100 g), HAF-HS ($N_2SA$: 82 $m^2/g$, DBP: 126 ml/100 g), HAF ($N_2SA$: 79 $m^2/g$, DBP: 101 ml/100 g), N351 ($N_2SA$: 74 $m^2/g$, DBP: 127 ml/100 g), LI-HAF ($N_2SA$: 74 $m^2/g$, DBP: 101 ml/100 g), MAF-HS ($N_2SA$: 56 $m^2/g$, DBP: 158 ml/100 g), MAF ($N_2SA$: 49 $m^2/g$, DBP: 133 ml/100 g), FEF-HS ($N_2SA$: 42 $m^2/g$, DBP: 160 ml/100 g), FEF ($N_2SA$: 42 $m^2/g$, DBP: 115 ml/100 g), SRF-HS ($N_2SA$: 32 $m^2/g$, DBP: 140 ml/100 g), SRF-HS ($N_2SA$: 29 $m^2/g$, DBP: 152 ml/100 g), GPF ($N_2SA$: 27 $m^2/g$, DBP: 87 ml/100 g), and SRF ($N_2SA$: 27 $m^2/g$, DBP: 68 ml/100 g). Specific examples of the color carbon black include HCC, MCC, RCC, LCC, HCF, MCF, RCF, LCF, LFF, and various acetylene blacks classified in accordance with Handbook of Carbon Black, 3rd edition (1995). Preferred among these are SAF-HS, SAF, N234, ISAF, ISAF-LS, ISAF-HS, N339, HAF-LS, HAF-HS, HAF, N351, LI-HAF, and MAF-HS. These carbon blacks may be used alone or in combination of two or more.

Preferred as the carbon black is a carbon black having a nitrogen adsorption specific surface area ($N_2SA$) of 25 to 180 $m^2/g$ and a dibutyl phthalate (DBP) oil absorption of 40 to 180 ml/100 g.

If the nitrogen adsorption specific surface area ($N_2SA$) is too small, the cross-linked fluorine rubber tends to have a low tensile elongation at break. Thus, the nitrogen adsorption specific surface area ($N_2SA$) is preferably 50 $m^2/g$ or greater, more preferably 70 $m^2/g$ or greater, still more preferably 90 $m^2/g$ or greater, particularly preferably 110 $m^2/g$ or greater. For easy availability, the upper limit thereof is preferably 180 $m^2/g$.

If the dibutyl phthalate (DBP) oil absorption is too low, the cross-linked fluorine rubber tends to have a low tensile elongation at break. Thus, the DBP oil absorption is preferably 50 ml/100 g or more, more preferably 60 ml/100 g or more, still more preferably 80 ml/100 g or more, particularly preferably 100 ml/100 g or more. For easy availability, the upper limit thereof is preferably 175 ml/100 g, more preferably 170 ml/100 g.

In the fluorine rubber composition, the amount of the carbon black is preferably 5 to 65 parts by mass relative to 100 parts by mass of the fluorine rubber. Too large an amount of the carbon black tends to cause an increased hardness of the cross-linked fluorine rubber, while too small an amount thereof tends to cause a decreased tensile elongation at break of the cross-linked fluorine rubber. In order to achieve a good balance of the physical properties, the amount thereof is more preferably 6 parts by mass or more, still more preferably 10 parts by mass or more, relative

to 100 parts by mass of the fluorine rubber. Also, in order to achieve a good balance of the physical properties, the amount thereof is more preferably 55 parts by mass or less, still more preferably 50 parts by mass or less, further more preferably 49 parts by mass or less, particularly preferably 45 parts by mass or less.

The fluorine rubber composition contains a compound (A). The compound (A) is at least one selected from the group consisting of fatty oils and aliphatic hydrocarbons.

The compound (A) has a boiling point at atmospheric pressure of 250°C or higher and a melting point or freezing point of 15°C or lower.

Since the boiling point of the compound (A) at atmospheric pressure is within the above range, the compound (A) is not volatilized from the cross-linked fluorine rubber even in a high-temperature environment. Thus, the cross-linked fluorine rubber can maintain an excellent elongation under heating. The boiling point of the compound (A) at atmospheric pressure is preferably 280°C or higher, more preferably 300°C or higher. The upper limit thereof may be any value, and may be 700°C. If the compound (A) has no boiling point at atmospheric pressure, the boiling point is defined as follows. Specifically, the compound (A) is heated from room temperature in the air atmosphere using a thermogravimetric analyzer, and the temperature at which the weight loss reaches 10% is defined as the boiling point.

Since the melting point or freezing point of the compound (A) is within the above range, the resulting cross-linked fluorine rubber has a high tensile elongation at break and a low hardness. The melting point or freezing point of the compound (A) is preferably 10°C or lower, more preferably 0°C or lower. The compound (A) with too high a melting point or freezing point causes an increased hardness of the cross-linked fluorine rubber. The lower limit thereof may be any value, and may be -100°C.

The amount of the compound (A) is preferably 1 to 30 parts by mass relative to 100 parts by mass of the fluorine rubber. The compound (A) in an amount within the above range enables production of a cross-linked fluorine rubber which has a high tensile elongation at break and a low hardness. In order to provide a cross-linked fluorine rubber which has a higher tensile elongation at break and a lower hardness, the amount of the compound (A) is more preferably 3 parts by mass or more, still more preferably 5 parts by mass or more, particularly preferably 8 parts by mass or more. In order to provide a cross-linked fluorine rubber which has a practically sufficient tensile strength at break, the amount thereof is more preferably 25 parts by mass or less, still more preferably 20 parts by mass or less, particularly preferably 15 parts by mass or less.

The aliphatic hydrocarbons are each a compound selected from the group consisting of compounds represented by the following formula (X):

$$C_mH_n \qquad (X)$$

(wherein m is an integer; and n is an even number of (2m + 2) or smaller) or a mixture of two or more compounds selected therefrom. Examples of the aliphatic hydrocarbons include saturated aliphatic hydrocarbons and unsaturated aliphatic hydrocarbons. Specific examples of the saturated aliphatic hydrocarbons include liquid paraffin and naphthenes, and specific examples of the unsaturated aliphatic hydrocarbons include terpenes. These aliphatic hydrocarbons may be used alone or in combination of two or more. For chemical stability, it is preferred to use one or more aliphatic hydrocarbons classified as saturated aliphatic hydrocarbons, and it is more preferred to use liquid paraffin.

The fluorine rubber composition may contain a fatty oil having a boiling point at atmospheric pressure of 250°C or higher and a melting point or freezing point of 15°C or lower.

Since the boiling point of the fatty oil at atmospheric pressure is within the above range, the fatty oil is not volatilized from the cross-linked fluorine rubber even in a high-temperature environment. Thus, the cross-linked fluorine rubber can maintain an excellent elongation under heating. The boiling point of the fatty oil at atmospheric pressure is preferably 280°C or higher, more preferably 300°C or higher. The upper limit thereof may be any value, and may be 700°C. If the fatty oil has no boiling point at atmospheric pressure, the boiling point is defined as follows. Specifically, the fatty oil is heated from room temperature in the air atmosphere using a thermogravimetric analyzer, and the temperature at which the weight loss reaches 10% is defined as the boiling point.

Since the melting point or freezing point of the fatty oil is within the above range, the resulting cross-linked fluorine rubber has a high tensile elongation at break and a low hardness. The melting point or freezing point of the fatty oil is preferably 10°C or lower, more preferably 0°C or lower. The fatty oil with too high a melting point or freezing point causes an increased hardness of the cross-linked fluorine rubber. The lower limit thereof may be any value, and may be -100°C.

In order to provide a cross-linked fluorine rubber which has a high tensile elongation at break and a low hardness, the fatty oils are each preferably at least one selected from the group consisting of nondrying oils and semidrying oils. Examples of the nondrying oils include castor oil, rapeseed oil, peanut oil, and olive oil. Examples of the semidrying oils include soybean oil, cottonseed oil, corn oil, and sunflower oil. The fatty oils are each more preferably at least one selected from the group consisting of castor oil, rapeseed oil, peanut oil, soybean oil, and cottonseed oil, still more preferably castor oil.

The amount of the fatty oil(s) is preferably 1 to 30 parts by mass relative to 100 parts by mass of the fluorine rubber. The fatty oil(s) in an amount within the above range enables production of a cross-linked fluorine rubber which has a high tensile elongation at break and a low hardness. In order to provide a cross-linked fluorine rubber which has a higher tensile elongation at break and a lower hardness, the amount of the fatty oil(s) is more preferably 3 parts by mass or more, still more preferably 5 parts by mass or more, particularly preferably 8 parts by mass or more. In order to provide a cross-linked fluorine rubber which has a practically sufficient tensile strength at break, the amount thereof is more preferably 25 parts by mass or less, still more preferably 20 parts by mass or less, particularly preferably 15 parts by mass or less.

The fluorine rubber composition contains a peroxide cross-linker as a cross-linker.

The peroxide cross-linker may be any peroxide that can easily generate peroxy radicals in the presence of heat or a redox system. Specific examples thereof include organic peroxides such as 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α-bis(t-butylperoxy)-p-diisopropylbenzene, α,α-bis(t-butylperoxy)-m-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butyl peroxybenzoate, t-butyl peroxymaleate, and t-butylperoxyisopropylcarbonate. Preferred among these is 2,5-dimethyl-2,5-di(t-butylperoxy)hexane or 2,5-dimethyl-2,5-di(t-butylperoxy)-hexyne-3.

The amount of the peroxide cross-linker is preferably 0.01 to 10 parts by mass, more preferably 0.1 to 9 parts by mass, relative to 100 parts by mass of the fluorine rubber. Too small an amount of the peroxide cross-linker may cause insufficient cross-linking of the fluorine rubber. Too large an amount thereof may cause scorch (premature vulcanization).

The fluorine rubber composition preferably further contains a cross-linking accelerator. The presence of the cross-linking accelerator enables production of a cross-linked fluorine rubber which has a high tensile elongation at break and a low hardness.

The cross-linking accelerator is preferably a compound containing two or more double bonds. Any compound containing two or more double bonds is basically effective as long as it is peroxide-vulcanizable, in other words, it has a reaction activity against peroxy radicals and polymer radicals. Examples thereof include polyvalent vinyl compounds, polyvalent allyl compounds, and polyvalent (meth)acrylates. Preferred examples thereof include triallyl cyanurate, triallyl isocyanurate, fluorinated triallyl isocyanurate, triacrylformal, triallyl trimellitate, ethylene bismaleimide, N,N'-m-phenylene bismaleimide, dipropargyl terephthalate, diallyl phthalate, tetraallyl terephthalamide, tris(diallylamine)-s-triazine, triallyl phosphite, N,N-diallyl acrylamide, and trimethylolpropane trimethacrylate. In order to provide a cross-linked fluorine rubber which has a higher tensile elongation at break and a lower hardness, preferred among these is triallyl isocyanurate.

The amount of the cross-linking accelerator is preferably 0.01 to 10 parts by mass, more preferably 0.1 to 9 parts by mass, particularly preferably 0.2 to 8 parts by mass, relative to 100 parts by mass of the fluorine rubber. Too small an amount of the cross-linking accelerator may cause insufficient cross-linking of the fluorine rubber. Too large an amount thereof may cause a failure in providing a cross-linked fluorine rubber which has a high tensile elongation at break and a low hardness.

The fluorine rubber composition may preferably further contain a low self-polymerizable cross-linking accelerator as a cross-linking accelerator. The low self-polymerizable cross-linking accelerator herein means a compound having a low self-polymerizability different from triallyl isocyanurate (TAIC) which is well known as a cross-linking accelerator.

Examples of the low self-polymerizable cross-linking accelerator include trimethallyl isocyanurate (TMAIC) represented by the following formula:

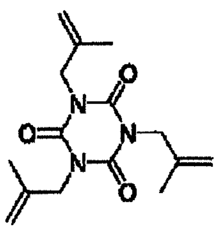

;

p-quinone dioxime represented by the following formula:

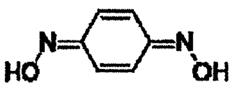

;

p,p'-dibenzoylquinone dioxime represented by the following formula:

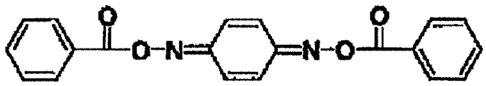

;

maleimide represented by the following formula:

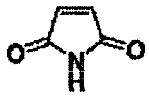

;

N-phenylene maleimide represented by the following formula:

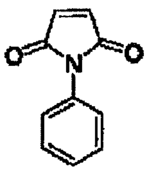

;

and N,N'-phenylene bismaleimide represented by the following formula:

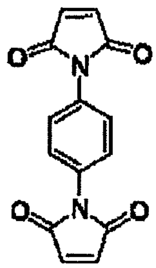

The low self-polymerizable cross-linking accelerator is preferably trimethallyl isocyanurate (TMAIC).
The cross-linking accelerator used in the peroxide cross-linking system may be bisolefin.
Examples of the bisolefin used as the cross-linking accelerator include bisolefins represented by the following formula:

$$R^2R^3C=CR^4\text{-}Z\text{-}CR^5=CR^6R^7$$

wherein $R^2$, $R^3$, $R^4$, $R^5$, $R^6$, and $R^7$ are the same as or different from each other, and are each H or a C1-C5 alkyl group; Z is a linear or branched, at least partially fluorinated C1-C18 alkylene or cycloalkylene group which may optionally contain an oxygen atom or a (per)fluoropolyoxyalkylene group).
Z is preferably a C4-C12 perfluoroalkylene group, and $R^2$, $R^3$, $R^4$, $R^5$, $R^6$, and $R^7$ are each preferably a hydrogen atom.
If Z is a (per)fluoropolyoxyalkylene group, it is preferably a (per)fluoropolyoxyalkylene group represented by

the following formula:

$$-(Q)_p-CF_2O-(CF_2CF_2O)_m-(CF_2O)_n-CF_2-(Q)p-$$

wherein Q is a C1-C10 alkylene or oxyalkylene group; p is 0 or 1; m and n are integers satisfying an m/n ratio of 0.2 to 5 and allowing the (per)fluoropolyoxyalkylene group to have a molecular weight of 500 to 10000, preferably 1000 to 4000. In this formula, Q is preferably selected from $-CH_2OCH_2-$ and $-CH_2O(CH_2CH_2O)_sCH_2-$ (s = 1 to 3).

Preferred examples of the bisolefin include

$$CH_2=CH-(CF_2)_4-CH=CH_2,$$

$$CH_2=CH-(CF_2)_6-CH=CH_2,$$

and those represented by the following formula:

$$CH_2=CH-Z^1-CH=CH_2$$

wherein $Z^1$ is $-CH_2OCH_2-CF_2O-(CF_2CF_2O)_m-(CF_2O)_n-CF_2-CH_2OCH_2-$(where m/n is 0.5).

Preferred is 3,3,4,4,5,5,6,6,7,7,8,8-dodecafluoro-1, 9-decadiene represented by $CH_2=CH-(CF_2)_6-CH=CH_2$.

The fluorine rubber composition may further contain any usual rubber compounding agents as appropriate, such as a filler, a processing aid, a plasticizer, a colorant, a tackifier, an adhesive aid, an acid acceptor, a pigment, a flame retardant, a lubricant, a photostabilizer, a weather-resistance stabilizer, an antistatic, an ultraviolet absorber, an antioxidant, a release agent, a foaming agent, a perfume, an oil, and a softening agent, as well as other polymers such as polyethylene, polypropylene, polyamide, polyester, and polyurethane, to the extent that the effects of the present invention are not impaired.

Examples of the filler include metal oxides such as calcium oxide, titanium oxide, aluminum oxide, and magnesium oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; synthesized hydrotalcite; metal sulfide such as molybdenum disulfide, iron sulfide, and copper sulfide; and diatomite, asbestos, lithopone (zinc sulfide/barium sulfate), graphite, carbon fluoride, calcium fluoride, coke, quartz fine powder, talc, mica powder, wollastonite, carbon fiber, aramid fiber, various whiskers, glass fiber, organic reinforcing agents, organic fillers, polytetrafluoroethylene, mica, silica, celite, and clay. Examples of the acid acceptor include calcium oxide, magnesium oxide, lead oxide, zinc oxide, magnesium hydroxide, calcium hydroxide, aluminum hydroxide, and hydrotalcite. These compounds may be used alone, or two or more of them may be blended as appropriate. These compounds may be added at any step of the kneading process to be mentioned later. It is preferred to add them when the fluorine rubber and the carbon black are kneaded in a closed kneader or a roll kneader.

Examples of the processing aid include higher fatty acids such as stearic acid, oleic acid, palmitic acid, and lauric acid; higher fatty acid salts such as sodium stearate and zinc stearate; higher fatty acid amides such as stearic acid amide and oleic acid amide; higher fatty acid esters such as ethyl oleate; petroleum-based waxes such as carnauba wax and ceresin wax; polyglycols such as ethylene glycol, glycerin, and diethylene glycol; aliphatic hydrocarbon silicone oils such as vaseline and paraffin wax; and silicone polymers, low molecular weight polyethylene, phthalic acid esters, phosphoric acid esters, rosin, (halogenated) dialkylamines, surfactants, sulfone compounds, fluorine auxiliary agents, and organic amine compounds.

In particular, the acid acceptor is a preferred compounding agent because the presence thereof in kneading of the fluorine rubber and the carbon black in a closed kneader or a roll kneader improves the reinforcibility.

For good reinforcibility, preferred among the above acid acceptors are metal hydroxides such as calcium hydroxide; metal oxides such as magnesium oxide and zinc oxide; and hydrotalcite.

The amount of the acid acceptor is preferably 0.01 to 10 parts by mass relative to 100 parts by mass of the fluorine rubber. Too large an amount of the acid acceptor tends to cause impaired physical properties. Too small an amount thereof tends to cause impaired reinforcibility. For good reinforcibility, the amount thereof is still more preferably 0.1 parts by mass or more relative to 100 parts by mass of the fluorine rubber. For good physical properties and easy kneading, the amount thereof is preferably 8 parts by mass or less, more preferably 5 parts by mass or less.

The fluorine rubber composition may be produced using, for example, a closed kneader or a roll kneader. Specifically, in order to provide a fluorine rubber composition capable of providing a cross-linked product which has a much better tensile elongation at break and a lower hardness, the following production method is preferred.

The production method includes Step (1) of mixing the carbon black and the compound (A) to provide a mixture; Step (2-1) of kneading the fluorine rubber and the mixture using a closed kneader or a roll kneader until the maximum

temperature reaches 80°C to 220°C to provide an intermediate composition (1); Step (2-2) of cooling the intermediate composition (1) down to a temperature lower than 50°C; and Step (4) of kneading the intermediate composition (1) and the peroxide cross-linker until the maximum temperature reaches a temperature lower than 130°C to provide a fluorine rubber composition.

In the above production method, Step (1) is one of important steps. The inventors found that mixing a specific carbon black and a specific compound (A) in advance and kneading the resulting mixture and fluorine rubber lead to production of a fluorine rubber composition with the compound (A) sufficiently dispersed therein and that this composition can provide a cross-linked fluorine rubber which has not only a high tensile elongation at break but also a sufficiently low hardness.

The inventors also found that mixing a specific carbon black and a specific compound (A) in advance and kneading the resulting mixture and fluorine rubber lead to production of a novel cross-linked product which has a very high tensile elongation at break and a very low hardness. This novel cross-linked product will be described later.

If the compound (A) is directly added to the fluorine rubber and they are kneaded, the compound (A) cannot be dispersed uniformly in the fluorine rubber. The intermediate composition (1) with the compound (A) uniformly dispersed therein does not have a unique gloss which is observed on an intermediate composition (1) with the compound (A) not dispersed therein. Thus, uniform dispersion of the compound (A) can be visually confirmed by the gloss on the surface of the intermediate composition (1), for example.

In the above production method, the compound (A) is at least one selected from the group consisting of fatty oils and aliphatic hydrocarbons, and may be a fatty oil.

Step (2-1) is a step of kneading fluorine rubber and the mixture until the maximum temperature reaches 80°C to 220°C to provide an intermediate composition (1). Step (2-1) leads to production of a fluorine rubber composition capable of providing a cross-linked fluorine rubber which has a good tensile elongation at break and a low hardness.

The kneading in Step (2-1) is performed using a closed kneader or a roll kneader. For high-temperature kneading, the kneading in Step (2-1) is preferably performed using a closed kneader. Examples of the closed kneader include tangential closed kneaders such as a Banbury mixer, intermeshing closed kneaders such as an Intermix, pressure kneaders, single-screw kneaders, and twin-screw kneaders.

In the case of using a closed kneader, the average shear rate of the rotor is preferably 20 to 1000 (1/sec), more preferably 50 to 1000 (1/sec), still more preferably 100 to 1000 (1/sec), further more preferably 200 to 1000 (1/sec), particularly preferably 300 to 1000 (1/sec).

The average shear rate (1/sec) is calculated by the following formula:

$$\text{Average shear rate (1/sec)} = (\pi \times D \times R)/(60\ \text{(sec)} \times c)$$

wherein

D: rotor diameter or roll diameter (cm)
R: rotational speed (rpm)
c: tip clearance (cm, distance between the rotor and the casing or the distance between the rolls).

In Step (2-1), it is preferred to knead other components such as a processing aid and an acid acceptor.

The kneading in Step (2-1) is performed until the maximum temperature of the matter under kneading reaches 80°C to 220°C. The kneading is preferably performed until the maximum temperature reaches 120°C or higher and 200°C or lower. The maximum temperature can be checked by measuring the temperature of the kneaded matter immediately after discharged from the kneader.

Step (2-2) is a step of cooling the intermediate composition (1) obtained in Step (2-1) down to a temperature lower than 50°C. The intermediate composition (1) obtained in Step (2-1) is at a temperature of 80°C to 220°C. Sufficiently cooling the intermediate composition (1) and then performing Step (4) lead to production of a fluorine rubber composition capable of providing a cross-linked fluorine rubber which has a good tensile elongation at break and a low hardness. Step (2-2) is preferably performed such that the whole intermediate composition (1) is cooled down to a temperature within the above range. The lower limit of the cooling temperature may be any value, and may be 10°C.

In Step (2-2), it is also preferred to cool the intermediate composition (1) while kneading the intermediate composition using a roll kneader.

Step (2-1) and Step (2-2) may be repeated any number of times. In the case of repeating Step (2-1) and Step (2-2), the kneading of the intermediate composition (1) is preferably performed until the maximum temperature reaches 120°C to 220°C, and the kneading of the intermediate composition (1) is more preferably performed until the maximum temperature reaches 120°C to 140°C. In the case of repeating Step (2-1) and Step (2-2), the kneading may be performed

using a closed kneader or using a roll kneader. Preferred is a closed kneader.

In the case of using a roll kneader, the average shear rate of the rotor is preferably 20 (1/sec) or higher, more preferably 50 (1/sec) or higher, still more preferably 100 (1/sec) or higher, further more preferably 200 (1/sec) or higher, particularly preferably 300 (1/sec) or higher, while preferably 1000 (1/sec) or lower.

The production method also preferably includes a step of putting fluorine rubber and the mixture into a closed kneader or a roll kneader, preferably a closed kneader. In this step, components such as a processing aid and an acid acceptor may be added.

Step (2-1) may include a step of adding any additive before the intermediate composition (1) is discharged. One additive may be used or two or more additives may be used. The additive(s) may be added once or multiple times. If two or more additives are added, they may be added at the same time or may be added in different cycles. Alternatively, one additive may be added multiple times. One example of the "step of adding any additive before the intermediate composition (1) is discharged" is a step of adding carbon black before the intermediate composition (1) is discharged.

Also, in the case of repeating Step (2-1) and Step (2-2), each Step (2-1) may include the above "step of adding any additive before the intermediate composition (1) is discharged". For example, in the second Step (2-1), a carbon black which is different from a carbon black used in the first Step (2-1) may be added.

The production method preferably further include Step (3-1) of kneading the intermediate composition (1) cooled in Step (2-2) until the maximum temperature reaches a temperature not lower than 10°C but lower than 80°C to provide an intermediate composition (2) between Step (2-2) and Step (4) to be mentioned later.

Step (3-1) is a step of further kneading the intermediate composition (1) which is sufficiently cooled in Step (2-2), and is an important step for improving the tensile elongation at break and reducing the hardness of the cross-linked fluorine rubber.

The kneading in Step (3-1) is performed until the maximum temperature of the matter under kneading reaches a temperature not lower than 10°C but lower than 80°C. If the maximum temperature of the matter under kneading is too high, the method may fail to provide a fluorine rubber composition capable of providing a cross-linked fluorine rubber which has a good tensile elongation at break and a low hardness.

Step (3-1) may further include a step of kneading different intermediate compositions (1) cooled in Step (2-2). The kneading in this case has only to be performed until the maximum temperature of the mixture of the different intermediate compositions (1) reaches a temperature not lower than 10°C but lower than 80°C.

The production method preferably includes Step (3-2) of repeating Step (3-1) (m-1) times (m is an integer of 2 or greater) after the first Step (3-1). Repeating Step (3-1) twice or more in total enables stable production of a fluorine rubber composition capable of providing a cross-linked fluorine rubber which has a good tensile elongation at break and a low hardness. The production method also preferably includes a step of cooling the intermediate composition (2) before each kneading in Step (3-2).

The kneadings in Step (3-1) and Step (3-2) may be performed using the aforementioned closed kneader or roll kneader.

Step (3-1) and Step (3-2) are preferably steps of kneading the intermediate composition (2) by putting the intermediate composition (1) or the intermediate composition (2) into a roll kneader and tightly milling it.

Fig. 1 schematically shows a kneading method by tight milling. As illustrated in Fig. 1(a), the intermediate composition (1) or the intermediate composition (2) is put into an open roll mill 10 provided with a first roll 11 and a second roll 12. The first roll 11 and the second roll 12 rotate at different speeds in the respective directions indicated by the arrows. The intermediate composition (1) or the intermediate composition (2) is then passed between the first roll 11 and the second roll 12 and sheeted under a shear force as illustrated in Fig. 1(b). Next, as illustrated in Fig. 1(c), the sheeted intermediate composition (2) is rolled up at an appropriate site.

The tensile elongation at break and other properties of the cross-linked fluorine rubber can be improved by only a single tight milling. Still, in order to achieve a much better tensile elongation at break, the tight milling is preferably performed m times in total (m is an integer of 2 or greater). Further, m is preferably an integer of 5 or greater, more preferably an integer of 10 or greater, still more preferably an integer of 30 or greater, further more preferably an integer of 50 or greater.

In the production method, Step (4) is a step of kneading the intermediate composition (1) obtained in Step (2-2) or the intermediate composition (2) obtained in Step (3-1) or Step (3-2) and a peroxide cross-linker until the maximum temperature reaches a temperature lower than 130°C to provide a fluorine rubber composition. Step (4) is an important step for improving the tensile elongation at break and reducing the hardness of the cross-linked fluorine rubber.

The kneading in Step (4) may be performed under the same conditions as in Step (2-1) except that the maximum temperature of the matter under kneading is lower than 130°C. In particular, the kneading is preferably performed using a roll kneader, a closed kneader, or the like with the average shear rate of the rotor being set to 20 (1/sec) or higher, preferably 50 (1/sec) or higher.

In Step (4), it is also preferred to knead a cross-linking accelerator together. The peroxide cross-linker and the cross-linking accelerator may be blended and kneaded at the same time, or the cross-linking accelerator may be first

blended and kneaded, and then the peroxide cross-linker may be blended and kneaded.

Cross-linking of the fluorine rubber composition provides a cross-linked fluorine rubber.

The cross-linking of the fluorine rubber composition may be achieved by any appropriately selected method. Examples thereof include usual cross-linking methods, including molding methods such as extrusion molding and wrapped cure, and a cross-linking method using a vulcanizer. If secondary cross-linking is required depending on the application of the cross-linked product, the workpiece may be further subjected to oven cross-linking.

The cross-linked fluorine rubber preferably has a tensile elongation at break of 500% or higher at 170°C and a hardness of 80 or lower at 25°C. A novel cross-linked fluorine rubber which has a tensile elongation at break of 500% or higher at 170°C and a hardness of 80 or lower at 25°C is also one aspect of the present invention. The cross-linked fluorine rubber which has a tensile elongation at break and a hardness within the above respective ranges can exert excellent conformity to a material with which the rubber is to contact while having an excellent elongation under heating.

The cross-linked fluorine rubber is preferably one obtainable from the above fluorine rubber composition, and is also preferably one obtainable by the above production method.

The cross-linked fluorine rubber may have a surface coated with a lubricant. The lubricant applied can reduce the coefficient of friction and, when the cross-linked fluorine rubber is brought into contact with a material in a dynamic environment, can minimize adhesion or sticking of the cross-linked fluorine rubber to the material. Examples of the lubricant include liquid lubricants such as liquid paraffin, fatty oils, naphthenes, fluorine oil, silicone oil, and ionic liquid; semisolid lubricants such as grease and vaseline; and solid lubricants such as molybdenum disulfide, tungsten disulfide, polytetrafluoroethylene, polyethylene, talc, mica, graphite, boron nitride, silicon nitride, fluorinated graphite, paraffin wax, higher fatty acids, higher fatty acid salts, higher fatty acid amides, and higher fatty acid esters. Examples of the applying method include a method of directly applying a lubricant and a method of dispersing or dissolving a lubricant in water or an organic solvent and then applying the dispersion or solution.

The tensile elongation at break at 170°C is more preferably 600% or higher, still more preferably 650% or higher, while preferably 1000% or lower, more preferably 800% or lower.

The cross-linked fluorine rubber preferably has a tensile elongation at break of 500% or higher at 25°C. The tensile elongation at break at 25°C is more preferably 700% or higher, still more preferably 800% or higher, while preferably 1500% or lower, more preferably 1200% or lower.

The tensile elongation at break can be determined by the following method. "Tensilon" RTG-1310 (A&D Co., Ltd.) and "Strograph" TH-200D (Toyo Seiki Seisaku-sho, Ltd.) are used as testers. The tensile elongation at break is measured using a No. 6 dumbbell with a chuck distance of 50 mm and a tensile rate of 500 mm/min in conformity with JIS K6251. The measurement temperatures are 25°C and 170°C.

The hardness at 25°C is more preferably 78 or lower, still more preferably 76 or lower, while preferably 60 or higher, more preferably 65 or higher.

The hardness can be determined by the following method. Durometer RH101A (Excel Inc.) is used as a tester. The hardness (peak value) is measured using a durometer type A at a measurement temperature of 25°C in conformity with JIS K6253-3.

The cross-linked fluorine rubber preferably has a coefficient of kinetic friction of 2.2 or lower at 170°C. The cross-linked fluorine rubber which has a coefficient of kinetic friction within this range can minimize adhesion or sticking thereof to a material when it is brought into contact with the material in a dynamic environment. In order to further minimize adhesion or sticking to a material, the coefficient of kinetic friction at 170°C is more preferably 2.0 or lower, still more preferably 1.8 or lower, particularly preferably 1.5 or lower.

The coefficient of kinetic friction can be determined by the following method. Friction Player FPR2000 (Rhesca Co., Ltd.) is used as a tester. The measurement is performed in a rotation mode at a load of 100 g (pin: $\phi$5 mm, made of SUJ2), a rotational speed of 4.8 rpm, and a radius of 10 mm. An average value of the measured coefficients of friction within 25 to 50 seconds from the start of the measurement is defined as the coefficient of kinetic friction.

For suitable use in a high-temperature environment, for example, the cross-linked fluorine rubber preferably has a tensile strength at break of 1 MPa or higher, more preferably 1.5 MPa or higher, particularly preferably 2 MPa or higher, while preferably 30 MPa or lower, particularly preferably 28 MPa or lower, at 170°C.

The tensile strength at break can be determined by the following method. "Tensilon" RTG-1310 (A&D Co., Ltd.) and "Strograph" TH-200D (Toyo Seiki Seisaku-sho, Ltd.) are used as testers. The tensile strength at break is measured using a No. 6 dumbbell with a chuck distance of 50 mm and a tensile rate of 500 mm/min in conformity with JIS K6251. The measurement temperature is 170°C.

For suitable use in a high-temperature environment, for example, the cross-linked fluorine rubber preferably has a tearing strength of 3 to 30 kN/m, more preferably 4 kN/m or higher, particularly preferably 5 kN/m or higher, while more preferably 29 kN/m or lower, particularly preferably 28 kN/m or lower, at 170°C.

The tearing strength can be determined by the following method. "Tensilon" RTG-1310 (A&D Co., Ltd.) and "Strograph" TH-200D (Toyo Seiki Seisaku-sho, Ltd.) are used as testers. The tearing strength is measured using a No. 6 dumbbell with a chuck distance of 50 mm and a tensile rate of 500 mm/min in conformity with JIS K6251. The

measurement temperature is 170°C.

The cross-linked fluorine rubber can be applied to various uses, and can be particularly suitably used as a bladder for tire vulcanization. A cross-linked fluorine rubber which is a bladder for tire vulcanization is also one aspect of the present invention.

The fluorine rubber composition and the cross-linked fluorine rubber can be applied to various uses, and may be particularly suitably applied to the following uses.

(1) Hose

The hose may be a monolayer hose consisting only of a cross-linked fluorine rubber which is obtainable by cross-linking the fluorine rubber composition of the present invention, or may be a multilayer hose having a laminate structure with another layer. The hose may be a monolayer hose consisting only of the cross-linked fluorine rubber of the present invention, or may be a multilayer hose having a laminate structure with another layer.

Examples of the monolayer hose include exhaust gas hoses, EGR hoses, turbocharger hoses, fuel hoses, brake hoses, and oil hoses.

Examples of the multilayer hose also include exhaust gas hoses, EGR hoses, turbocharger hoses, fuel hoses, brake hoses, and oil hoses.

A turbo system is a system provided for many diesel engines. In this system, exhaust gas from the engine is delivered to and rotates a turbine so that a compressor connected to the turbine is driven, whereby the compression ratio of the air supplied to the engine is increased and the power output is improved. The turbo system, which utilizes exhaust gas from the engine and achieves a high power output, leads to miniaturization of engines, low power consumption of automobiles, and cleaner exhaust gas emission.

The turbocharger hoses are used in turbo systems as hoses for delivering compressed air to engines. In order to effectively utilize narrow space in the engine room, these hoses are advantageously made of rubber, which has excellent flexibility and elasticity. Typically used multilayer hoses include an inner layer which is a rubber (especially, fluorine rubber) layer having excellent heat-aging resistance and oil resistance and an outer layer which is a silicone rubber or acrylic rubber layer. The area surrounding an engine, such as the engine room, is in a severe environment where it is exposed to high temperature and vibration. Thus, the components in this area need to have not only excellent heat-aging resistance but also excellent mechanical properties at high temperature.

The hose can satisfy the above requirements at high levels and can provide a turbocharger hose having excellent characteristics when it includes, as a monolayer or multilayer rubber layer, a cross-linked fluorine rubber layer obtainable by cross-linking the fluorine rubber composition of the present invention or a cross-linked fluorine rubber layer formed from the cross-linked fluorine rubber of the present invention.

In multilayer hoses other than the turbocharger hoses, examples of the layers made of a different material include layers made of a different rubber, layers made of thermoplastic resin, various fiber-reinforced layers, and metal foil layers.

If the chemical resistance and the elasticity are particularly required, the different rubber is preferably at least one rubber selected from the group consisting of acrylonitrile-butadiene rubber or hydrogenated rubber thereof, rubber blend of acrylonitrile-butadiene rubber and polyvinyl chloride, fluorine rubber, epichlorohydrin rubber, EPDM, and acrylic rubber. More preferred is at least one rubber selected from the group consisting of acrylonitrile-butadiene rubber or hydrogenated rubber thereof, rubber blend of acrylonitrile-butadiene rubber and polyvinyl chloride, fluorine rubber, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferred is at least one thermoplastic resin selected from the group consisting of fluororesin, polyamide resin, polyvinyl alcohol resin, and polyphenylene sulfide resin.

In the case of producing a multilayer hose, surface treatment may be performed if necessary. This surface treatment may be any treatment which enables adhesion. Examples thereof include discharge treatment, such as plasma discharge treatment and corona discharge treatment, and metal sodium/naphthalene liquid treatment which is a wet process. Primer treatment is also preferred as surface treatment. The primer treatment can be performed in the usual manner. The primer treatment may be applied to the surface of fluorine rubber where no surface treatment is performed. Still, it is more effective to perform plasma discharge treatment, corona discharge treatment, or metal sodium/naphthalene liquid treatment before the primer treatment.

The hose including a cross-linked fluorine rubber layer obtainable by cross-linking the fluorine rubber composition of the present invention or a cross-linked fluorine rubber layer formed from the cross-linked fluorine rubber of the present invention particularly needs to have excellent elasticity at room temperature so as to be easily attached to a metal pipe. Unfortunately, hoses suffer cracks at sites exposed to high temperature and thus having increased strains. For such uses, a fluorine rubber composition capable of providing a cross-linked product which exhibits not only excellent

heat resistance but also excellent tensile physical properties at high temperature and tensile durability, as disclosed in the present invention, or the cross-linked fluorine rubber of the present invention can suitably be used, minimizing generation of cracks and preventing growth of cracks. When the fluorine rubber composition contains 5 to 20 parts by mass of carbon black relative to 100 parts by mass of the fluorine rubber, the hose exhibits excellent elasticity (a low hardness) at room temperature, crack resistance, and crack-growth resistance.

The hose can suitably be used in the following fields.

In the field relating to production of semiconductors, such as semiconductor manufacturing devices, liquid crystal panel manufacturing devices, plasma panel manufacturing devices, plasma addressed liquid crystal panels, field emission display panels, and solar cell substrates, the hose can be used for devices exposed to high temperature, such as CVD devices, dry etching devices, wet etching devices, oxidation and diffusion devices, spattering devices, ashing devices, washing devices, ion implantation devices, and exhaust devices.

In the field of automobiles, the hose can be used for engines and peripherals of automatic transmissions, and can be used as any of turbocharger hoses, as well as EGR hoses, exhaust gas hoses, fuel hoses, oil hoses, brake hoses, and the like.

The hose can be used as any hose in the fields of aircraft, of rockets, of shipping, of chemical plants, of analysis and physical and chemical instruments, of food plant machinery, and of equipment for nuclear power plants, for example.

(2) Sealant

A sealant used in a petroleum-mining device is unfortunately broken due to rapid decompression when the pressure in a deep well is suddenly released. Further, the sealant is used in an environment where the temperature is high and the sealant is exposed to gas such as hydrogen sulfide. The production conditions in the petroleum and gas industry include high temperature and high pressure. Thus, the sealant including a cross-linked fluorine rubber layer obtainable by cross-linking the fluorine rubber composition of the present invention needs to exhibit rapid gas decompression resistance, as well as excellent heat resistance and chemical resistance.

For such a use, a fluorine rubber composition capable of providing a cross-linked product which exhibits excellent heat resistance as well as excellent tensile physical properties at high temperature and tensile durability, as disclosed in the present invention, or the cross-linked fluorine rubber of the present invention can suitably be used. A cross-linked product exhibiting excellent tensile physical properties at high temperature (tensile strength at break, tensile elongation at break) and tensile durability has high gas decompression resistance and can avoid breakage (destruction, cracking) of the seal. When the fluorine rubber composition contains 10 to 60 parts by mass of carbon black relative to 100 parts by mass of the fluorine rubber, the sealant in the present invention exhibits excellent heat resistance, chemical resistance, and rapid gas decompression resistance at high temperature and high pressure.

The sealant can suitably be used in the following fields.

Examples of the sealant include sealants such as gaskets and non-contact or contact packings (self-seal packings, piston rings, split ring packings, mechanical seals, and oil seals) requiring heat resistance, oil resistance, fuel oil resistance, resistance to antifreeze for engine cooling, and steam resistance for engine bodies, main drive systems, valve train systems, lubrication and cooling systems, fuel systems, and intake and exhaust systems of automobile engines; transmission systems of driveline systems; steering systems of chassis; braking systems; and electrical parts (e.g., basic electrical parts, electrical parts of control systems, and electrical accessories).

Any sealant may be used for engine bodies of automobile engines, and examples thereof include sealants such as cylinder head gaskets, cylinder head cover gaskets, sump packings, general gaskets, O-rings, packings, and timing belt cover gaskets.

Any sealant may be used for main drive systems of automobile engines, and examples thereof include shaft seals such as crankshaft seals and camshaft seals.

Any sealant may be used for valve train systems of automobile engines, and examples thereof include valve stem oil seals of engine valves and valve sheets of butterfly valves.

Any sealant may be used for lubrication and cooling systems of automobile engines, and examples thereof include seal gaskets of engine oil coolers.

Any sealant may be used for fuel systems of automobile engines, and examples thereof include oil seals of fuel pumps, filler seals and tank packings of fuel tanks, connector O-rings of fuel tubes, injector cushion rings, injector seal rings, and injector O-rings of fuel injection systems, flange gaskets of carburetors, and EGR sealants.

Any sealant may be used for intake and exhaust systems of automobile engines, and examples thereof include intake manifold packings and exhaust manifold packings of manifolds, throttle body packings of throttles, and turbine shaft seals of turbochargers.

Any sealant may be used for transmission systems of automobiles, and examples thereof include transmission-related bearing seals, oil seals, O-rings, and packings, and O-rings and packings of automatic transmissions.

Any sealant may be used for braking systems of automobiles, and examples thereof include oil seals, O-rings,

packings, piston cups (rubber cups) for master cylinders, caliper seals, and boots.

Any sealant may be used for electrical accessories of automobiles, and examples thereof include O-rings and packings of automobile air conditioners.

The sealant is particularly suitable for sensor sealants (bushes), and is suitable for oxygen sensor sealants, nitrogen oxide sensor sealants, and sulfur oxide sensor sealants. The O-rings may be square rings.

In addition to the field of automobiles, the sealant can be used in a wide variety of fields, such as the fields of aircraft, of rockets, of shipping, of oilfield drilling (e.g., packer seals, MWD seals, LWD seals), of chemistry (e.g., chemical plants), of chemicals (e.g., pharmaceuticals), of photography (e.g., film processors), of printing (e.g., printers), of coating (e.g., coating equipment), of analysis and physical and chemical instruments, of food plant machinery, of equipment for nuclear power plants, of steel (e.g., sheet steel processing equipment), of general industry, of electrics, of fuel cells, and of electronic parts, and the field relating to on-site molding.

Examples of the sealant include oil-, chemical-, heat-, steam-, or weather-resistant packings, O-rings, and other sealants in transports such as shipping and aircraft; similar packings, O-rings, and sealants used in oilfield drilling; similar packings, o-rings, and sealants used in chemical plants; similar packings, O-rings, and sealants used in food plant equipment and food machinery (including household items); similar packings, O-rings, and sealants used in equipment for nuclear power plants; and similar packings, O-rings, and sealants used in general industrial parts.

(3) Belt

When a belt and belt parts are used under severe conditions, such as high temperature and chemical (oil) atmosphere, they are repeatedly stretched and compressed at pulley portions. Thus, the belt and belt parts including a cross-linked fluorine rubber layer obtainable by cross-linking the fluorine rubber composition of the present invention need to have heat resistance and chemical resistance, as well as repeated stretch and compression characteristics at high temperature. Further, since the belt has complicated shapes, such as wave cleats and side cleats, it may unfortunately be torn when removed from a molding die. For such uses, a fluorine rubber composition capable of providing a cross-linked product which exhibits heat resistance and chemical resistance, as well as excellent tensile physical properties at high temperature and tensile durability, as disclosed in the present invention, or the cross-linked fluorine rubber of the present invention are suitably used. When the fluorine rubber composition contains 5 to 60 parts by mass of carbon black relative to 100 parts by mass of the fluorine rubber, the belt and belt parts in the present invention exhibit excellent heat resistance, chemical resistance, and repeated tensile and compression characteristics at high temperature.

The cross-linked fluorine rubber can suitably be used for the following belts.

The cross-linked fluorine rubber can be used as belt material for power transmission belts (including flat belts, V-belts, V-ribbed belts, and toothed belts) and transportation belts (conveyor belts). In the field relating to production of semiconductors, such as semiconductor manufacturing devices, liquid crystal panel manufacturing devices, plasma panel manufacturing devices, plasma addressed liquid crystal panels, field emission display panels, and solar cell substrates, the cross-linked fluorine rubber can be used as belt material for devices exposed to high temperature, such as CVD devices, dry etching devices, wet etching devices, diffusion and oxidation devices, spattering devices, ashing devices, washing devices, ion implantation devices, and exhaust devices.

Examples of the flat belts include flat belts used for portions where the temperature becomes high, such as portions around engines of agricultural machinery, machine tools, and industrial machinery. Examples of the conveyor belts include conveyor belts for transporting bulk or particles of coal, smashed rock, earth and sand, ores, and wood chips in a high-temperature environment, conveyor belts used in iron mills, such as blast furnaces, and conveyor belts used for applications exposed to high temperature in high-precision machine assembling factories and food factories. Examples of the V-belts and V-ribbed belts include V-belts and V-ribbed belts for agricultural machinery, general equipment (e.g., OA equipment, printers, dryers for business purposes), and automobiles. Examples of the toothed belts include toothed belts such as power transmission belts of transporting robots and power transmission belts of food machinery and machine tools, and toothed belts for automobiles, OA equipment, medical uses, and printers. In particular, timing belts are typical toothed belts for automobiles.

In multilayer belts, examples of the layers made of a different material include layers made of a different rubber, layers made of thermoplastic resin, various fiber-reinforced layers, canvas layers, and metal foil layers.

If the chemical resistance and the elasticity are particularly required, the different rubber is preferably at least one rubber selected from the group consisting of acrylonitrile-butadiene rubber or hydrogenated rubber thereof, rubber blend of acrylonitrile-butadiene rubber and polyvinyl chloride, fluorine rubber, epichlorohydrin rubber, EPDM, and acrylic rubber. More preferred is at least one rubber selected from the group consisting of acrylonitrile-butadiene rubber or hydrogenated rubber thereof, rubber blend of acrylonitrile-butadiene rubber and polyvinyl chloride, fluorine rubber, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferred is at least one thermoplastic resin selected from the group consisting of fluororesin, polyamide resin, polyvinyl alcohol resin, and polyphenylene sulfide resin.

In the case of producing a multilayer belt, surface treatment may be performed if necessary. This surface treatment may be any treatment which enables adhesion. Examples thereof include discharge treatment, such as plasma discharge treatment and corona discharge treatment, and metal sodium/naphthalene liquid treatment which is a wet process. Primer treatment is also preferred as surface treatment. The primer treatment can be performed in the usual manner. The primer treatment may be applied to the surface of fluorine rubber where no surface treatment is performed. Still, it is more effective to perform plasma discharge treatment, corona discharge treatment, or metal sodium/naphthalene liquid treatment before the primer treatment.

(4) Damper rubber

The cross-linked fluorine rubber can satisfy the characteristics required for damper rubber at high levels and can provide a damper rubber for automobiles having excellent characteristics when it is used for a monolayer or multilayer rubber layer of the damper rubber.

In multilayer damper rubber other than the damper rubber for automobiles, examples of the layers made of a different material include layers made of a different rubber, layers made of thermoplastic resin, various fiber-reinforced layers, and metal foil layers.

If the chemical resistance and the elasticity are particularly required, the different rubber is preferably at least one rubber selected from the group consisting of acrylonitrile-butadiene rubber or hydrogenated rubber thereof, rubber blend of acrylonitrile-butadiene rubber and polyvinyl chloride, fluorine rubber, epichlorohydrin rubber, EPDM, and acrylic rubber. More preferred is at least one rubber selected from the group consisting of acrylonitrile-butadiene rubber or hydrogenated rubber thereof, rubber blend of acrylonitrile-butadiene rubber and polyvinyl chloride, fluorine rubber, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferred is at least one thermoplastic resin selected from the group consisting of fluororesin, polyamide resin, polyvinyl alcohol resin, and polyphenylene sulfide resin.

In the case of producing a multilayer damper rubber, surface treatment may be performed if necessary. This surface treatment may be any treatment which enables adhesion. Examples thereof include discharge treatment, such as plasma discharge treatment and corona discharge treatment, and metal sodium/naphthalene liquid treatment which is a wet process. Primer treatment is also preferred as surface treatment. The primer treatment can be performed in the usual manner. The primer treatment may be applied to the surface of fluorine rubber where no surface treatment is performed. Still, it is more effective to perform plasma discharge treatment, corona discharge treatment, or metal sodium/naphthalene liquid treatment before the primer treatment.

(5) Diaphragm

A diaphragm including a cross-linked fluorine rubber layer obtainable by cross-linking the fluorine rubber composition of the present invention needs to have repeated bending resistance in a high-temperature environment. For such a use, a fluorine rubber composition capable of providing a cross-linked product which exhibits excellent heat resistance as well as excellent tensile physical properties at high temperature and tensile durability, as disclosed in the present invention, or the cross-linked fluorine rubber of the present invention can suitably be used. When the fluorine rubber composition contains 5 to 30 parts by mass of carbon black relative to 100 parts by mass of the fluorine rubber, the diaphragm in the present invention exhibits excellent heat resistance, chemical resistance, and repeated bending resistance not only at room temperature but also at high temperature.

The cross-linked fluorine rubber can suitably be used for the following diaphragms.

Examples of the uses thereof for automobile engines include diaphragms for fuel systems, exhaust systems, braking systems, driveline systems, and ignition systems where characteristics such as heat resistance, oxidation resistance, fuel resistance, and low gas permeability are required.

Examples of diaphragms used in the fuel systems of automobile engines include diaphragms for fuel pumps, diaphragms for carburetors, diaphragms for pressure regulators, diaphragms for pulsation dampers, diaphragms for ORVR, diaphragms for canisters, and diaphragms for auto fuel cocks.

Examples of diaphragms used for the exhaust systems of automobile engines include diaphragms for wastegates, diaphragms for actuators, and diaphragms for EGR.

Examples of diaphragms used for the braking systems of automobile engines include diaphragms for air brakes.

Examples of diaphragms used for the driveline systems of automobile engines include diaphragms for oil pressure.

Examples of diaphragms used for the ignition systems of automobile engines include diaphragms for distributors.
Examples thereof in the uses other than automobile engines include those for the uses requiring characteristics such as heat resistance, oil resistance, chemical resistance, steam resistance, and low gas permeability, such as diaphragms for general pumps, diaphragms for valves, diaphragms for filter presses, diaphragms for blowers, diaphragms for air conditioners, diaphragms for controlling devices, diaphragms for water supply, diaphragms used in pumps for delivering hot water for hot-water supply, diaphragms for high-temperature vapor, diaphragms for semiconductor devices (e.g., diaphragms for transporting chemical liquids used in production steps), diaphragms for food processing equipment, diaphragms for liquid storage tanks, diaphragms for pressure switches, diaphragms used in prospecting and mining petroleum (e.g., diaphragms for feeding lubricants in petroleum mining pits), diaphragms for gas appliances (e.g., gas instantaneous hot-water heaters and gas meters), diaphragms for accumulators, diaphragms for air springs (e.g., suspensions), diaphragms for screw feeders for shipping, and diaphragms for medical artificial hearts.

(6) Hollow rubber molded article

The cross-linked fluorine rubber can suitably be used for hollow rubber molded articles.
Examples of the hollow rubber molded article include bladders, bellows-like molded articles, and primer bulbs.

(6-1) Bladder

The cross-linked fluorine rubber can suitably be used for bladders used in vulcanization and molding of tires (bladders for tire production).
In a usual tire production process, roughly two types of bladders are used, i.e., a bladder for tire building used in assembling the components of a tire to form a green tire (non-vulcanized tire) and a bladder for tire vulcanization used in vulcanization for giving the target shape of the tire as a product.
The cross-linked fluorine rubber can be used for both the bladder for tire building and the bladder for tire vulcanization, and is preferably used for the bladder for tire vulcanization which is repeatedly used under heating conditions and thus is required to have high heat resistance and tensile characteristics at high temperature.

(6-2) Bellows-like molded article

The bellows structure is a structure having either or both of a series of mountain portions and a series of valley portions in the circumferential direction of a cylinder, and the mountain or valley portions may be in the form of circular waves or of triangular waves.
Specific examples of the bellows-like molded article include joint parts such as flexible joints and expansion joints, boots, and grommets.
The joint parts are joints used for pipes and piping equipment, and are used for preventing vibrations and noises generated by piping systems, absorption of expansion and contraction and displacement due to temperature change and pressure change, absorption of dimensional changes, and mitigation or prevention of influences due to earthquakes or land subsidence.
The flexible joints and expansion joints may be preferably used for shipbuilding piping, piping of machinery such as pumps and compressors, chemical plant piping, electric piping, piping of civil engineering works and waterworks, and of automobiles.
The boots may be preferably used as boots for various industries, including boots for automobiles (e.g., constant-velocity joint boots, dust covers, rack and pinion steering boots, pin boots, and piston boots), boots for agricultural machinery, boots for industrial vehicles, boots for construction machinery, boots for hydraulic machinery, boots for pneumatic machinery, boots for centralized lubrication systems, boots for liquid transportation, boots for firefighting, and boots for liquefied gas transportation.

(6-3) Primer bulb

The primer bulb is a pump for delivering fuel to a carburetor (a float chamber of the carburetor) in advance so as to allow the engine to start easily. For example, the primer bulb may have one mountain portion in the circumferential direction of a cylinder, and the mountain portion is in the form of a circular wave. The shape of the primer bulb may be as illustrated in Fig. 2. In general, a primer bulb 21 is disposed between an exhaust-side (engine-side) hose 23 and an intake-side (fuel tank-side) hose 24.
Examples of the primer bulb include primer bulbs for automobiles, shipping, aircraft, construction machinery, agricultural machinery, and mining machinery. The primer bulb is particularly useful as a primer bulb for shipping.

(7) Fluorine rubber coating composition

The fluorine rubber composition of the present invention can also be applicable to fluorine rubber coating compositions. A coat obtainable from the fluorine rubber coating composition exhibits excellent tensile physical properties at high temperature and durability (tensile fatigue characteristics), and thus is less likely to be broken even under high-temperature conditions.
The fluorine rubber coating composition is preferably such that the fluorine rubber composition of the present invention is dissolved or dispersed in a liquid medium.
The fluorine rubber coating composition can be prepared by kneading the components constituting the fluorine rubber composition by, for example, the aforementioned method, and then dissolving or dispersing the resulting fluorine rubber composition in a liquid medium such as a ketone, ester, or ether.
The fluorine rubber coating composition may be directly applied to a base made of metal, glass, resin, rubber, or the like, or may be applied to a primer layer formed from, for example, epoxy coating. Further, another coat (top coat layer) may be formed on the coat obtained from the fluorine rubber coating composition.
Examples of the coat obtained from the fluorine rubber coating composition include sheets and belts; sealants of sealing members; pre-coated metals; packing rubbers, O-rings, diaphragms, chemical-resistant tubes, drug stoppers, fuel hoses, valve seals, gaskets for chemical plants, and engine gaskets; and rolls (e.g., fixing rolls, pressure rolls) and transporting belts for OA equipment (e.g., copiers, printers, faxes). The engine gaskets can be used as head gaskets of automobile engines, for example.

(8) Electric wire coat

The fluorine rubber composition can also suitably be used for insulating coats for electric wires requiring heat resistance and elasticity (flexibility) and sheath materials constituting sheath layers disposed around insulation layers of electric wires, providing coats which exhibit excellent bending resistance at high temperature.
Examples of the insulating coats or sheath materials include insulating coats or sheath materials used for heat-resistant electric wires for automobiles, aircraft, and military vehicles requiring heat resistance. Particularly preferred are insulating coats or sheath materials for coated electric wires used in an environment where it is brought into contact with transmission oil or engine oil of internal engines, or coated electric wires used in automatic transmissions or engine sumps of automobiles.

EXAMPLES

The present invention will be described with reference to, but not limited to, examples.
The values in the examples were determined as follows.

(1) Tensile strength at break, tensile elongation at break

"Tensilon" RTG-1310 (A&D Co., Ltd.) and "Strograph" TH-200D (Toyo Seiki Seisaku-sho, Ltd.) were used as testers. The tensile strength at break and the tensile elongation at break were measured using a No. 6 dumbbell with a chuck distance of 50 mm and a tensile rate of 500 mm/min in conformity with JIS K6251. The measurement temperature was 170°C.

(2) Hardness

Durometer RH101A (Excel Inc.) was used as a tester. The hardness (peak value) was measured using a durometer type A at a measurement temperature of 25°C in conformity with JIS K6253-3.

(3) Coefficient of kinetic friction

Friction Player FPR2000 (Rhesca Co., Ltd.) was used as a tester. The surface temperature of a specimen was adjusted to 170°C, and the measurement was performed in a rotation mode at a load of 100 g (pin: $\phi$5 mm, made of SUJ2), a rotational speed of 4.8 rpm, and a radius of 10 mm. An average value of the measured coefficients of friction within 25 to 50 seconds from the start of the measurement was defined as the coefficient of kinetic friction.
In the examples and comparative examples, the following fluorine rubber, carbon blacks, compounds (A), peroxide cross-linker, and other compounding agents were used.

(Fluorine rubber)

G-801 (Daikin Industries, Ltd.)

(Carbon black)

ISAF carbon black ($N_2SA$ = 115 $m^2/g$, DBP oil absorption = 115 ml/100 g)
MT carbon black ($N_2SA$ = 8 $m^2/g$, DBP oil absorption = 43 ml/100 g)

(Compound (A): fatty oil)

Castor oil (boiling point = 320°C (1 atm), freezing point = -22°C)

(Compound (A): aliphatic hydrocarbon)

Liquid paraffin (boiling point = 360°C (1 atm), freezing point = -15°C)

(Peroxide cross-linker)

2,5-Dimethyl-2,5-di(t-butylperoxy)hexane

(Cross-linking accelerator)

Triallyl isocyanurate
Trimethallyl isocyanurate

(Processing aid)

Stearic acid

(Acid acceptor)

Hydrotalcite

Example 1

First, 30 parts by mass of carbon black, 0.5 parts by mass of stearic acid, 1 part by mass of hydrotalcite, and 10 parts by mass of castor oil were mixed to prepare a mixture (A). This mixture (A) was kneaded with 100 parts by mass of fluorine rubber using a dispersion kneader at a rotor average shear rate of 410 (1/sec). This kneaded product was cooled down and kneaded in an 8-inch open roll mill controlled to 25°C until the temperature reached 100°C or lower, and then the product was discharged. Then, the kneaded product after the cooling and kneading was aged at 25°C for 24 hours, whereby a fluorine rubber pre-compound (B1) was obtained.

Next, using an 8-inch open roll mill (Kansai Roll Co., Ltd.), 141.5 parts by mass of the fluorine rubber pre-compound (B1), 1 part by mass of a peroxide cross-linker, and 0.5 parts by mass of triallyl isocyanurate were kneaded for 15 minutes, whereby a fluorine rubber full compound (C1) was prepared.

The fluorine rubber full compound (C1) was pressed at 170°C for 30 minutes to be cross-linked, whereby a cross-linked fluorine rubber sheet having a thickness of 2 mm was produced. This sheet was subjected to measurements of tensile strength at break and tensile elongation at break at 170°C and measurement of hardness at 25°C. Table 1 shows the results. Further, the coefficient of kinetic friction at 170°C was measured, and was 1.3.

Example 2

The kneading was performed in the same manner as in Example 1 except that the amount of the castor oil was changed from 10 parts by mass to 5 parts by mass, whereby a fluorine rubber full compound (C2) was prepared. A cross-linked fluorine rubber sheet was produced in the same manner as in Example 1, and the physical properties were determined. Table 1 shows the results. Further, the coefficient of kinetic friction at 170°C was measured, and was 2.1.

Examples 3 and 4

A fluorine rubber pre-compound, a fluorine rubber full compound, and a cross-linked fluorine rubber sheet were produced in the same manner as in Example 1 except that the components and the amounts thereof were changed as shown in Table 1. Table 1 shows the results. The coefficients of kinetic friction at 170°C were respectively 1.5 and 2.1.

Comparative Example 1

The kneading was performed in the same manner as in Example 1 except that the castor oil was not added, whereby a fluorine rubber full compound (C3) was prepared. A cross-linked fluorine rubber sheet was produced in the same manner as in Example 1, and the physical properties were determined. Table 1 shows the results. Further, the coefficient of kinetic friction at 170°C was measured, and was 2.4.

Comparative Example 2

The kneading was performed in the same manner as in Example 1 except that the castor oil was not added and trimethallyl isocyanurate was added instead of the triallyl isocyanurate, whereby a fluorine rubber full compound (C4) was prepared. A cross-linked fluorine rubber sheet was produced in the same manner as in Example 1, and the physical properties were determined. Table 1 shows the results. The coefficient of kinetic friction at 170°C was 2.5.

Comparative Examples 3 and 4

A fluorine rubber pre-compound, a fluorine rubber full compound, and a cross-linked fluorine rubber sheet were produced in the same manner as in Example 1 except that the components and the amounts thereof were changed as shown in Table 1. Table 1 shows the results.

Comparative Example 5

A fluorine rubber pre-compound and a fluorine rubber full compound were produced in the same manner as in Example 1 except that the components and the amounts thereof were changed as shown in Table 1. However, this comparative example failed to provide a cross-linked fluorine rubber sheet due to under cure.

[Table 1]

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Amounts (parts by mass) | | | | | | | | | |
| Fluorine rubber | 100 | 100 | 100 | 100 | 100 | 100 | 100 | 100 | 100 |
| Carbon black (ISAF) | 30 | 30 | 30 | 30 | 30 | 30 | 30 | 0 | 0 |
| Carbon black (MT) | 0 | 0 | 0 | 0 | 0 | 0 | 0 | 30 | 30 |
| Stearic acid | 0.5 | 0.5 | 0.5 | 0.5 | 0.5 | 0.5 | 10.5 | 0.5 | 0.5 |
| Hydrotalcite | 1 | 1 | 1 | 1 | 1 | 1 | 1 | 1 | 1 |
| Castor oil | 10 | 5 | 0 | 0 | 0 | 0 | 0 | 0 | 0 |
| Liquid paraffin | 0 | 0 | 10 | 5 | 0 | 0 | 0 | 0 | 10 |
| 2,5-Dimethyl-2,5-di(t-butylperoxy)hexane | 1 | 1 | 1 | 1 | 1 | 1 | 1 | 1 | 1 |
| Triallyl isocyanurate | 0.5 | 0.5 | 0.5 | 0.5 | 0.5 | 0 | 0.5 | 0.5 | 0.5 |
| Trimethallyl isocyanurate | 0 | 0 | 0 | 0 | 0 | 0.5 | 0 | 0 | 0 |
| Press cross-linking conditions | 170°C × 30 min | 170°C × 30 min | 170°C × 30 min | 170°C × 30 min | 170°C × 30 min | 170°C × 30 min | 170°C × 30 min | 170°C × 30 min | 170°C × 30min |
| Measured values for physical properties of cross-linked product | | | | | | | | | |
| Tensile strength at break at 170'C (MPa) | 26 | 4.1 | 2.9 | 4.0 | 5.2 | 5.7 | 2.8 | 2.3 | Not cross-linked |
| Tensite elongation at break at 170°C (%) | 710 | 635 | 610 | 515 | 380 | 510 | 800 | 220 | Not cross-linked |
| Hardness at 25°C | 74 | 78 | 74 | 78 | 82 | 86 | 92 | 74 | Not cross-linked |

REFERENCE SIGNS LIST

10: open roll mill
11: first roll
12: second roll
13: intermediate composition
14: sheeted composition
21: primer bulb
22: mountain portion
23: exhaust-side (engine-side) hose
24: intake-side (fuel tank-side) hose

## Claims

1. A fluorine rubber composition comprising:

    fluorine rubber;
    carbon black;
    at least one compound (A) selected from the group consisting of fatty oils and aliphatic hydrocarbons; and
    a peroxide cross-linker,
    the carbon black having a nitrogen adsorption specific surface area ($N_2SA$) of 25 to 180 $m^2/g$,
    the compound (A) having a boiling point at atmospheric pressure of 250°C or higher and a melting point or freezing point of 15°C or lower.

2. The fluorine rubber composition according to claim 1, wherein the fatty oils are each at least one selected from the group consisting of nondrying oils and semidrying oils.

3. The fluorine rubber composition according to claim 1 or 2, wherein the compound (A) is present in an amount of 1 to 30 parts by mass relative to 100 parts by mass of the fluorine rubber.

4. The fluorine rubber composition according to claim 1, 2, or 3, wherein the carbon black is present in an amount of 5 to 65 parts by mass relative to 100 parts by mass of the fluorine rubber.

5. A cross-linked fluorine rubber comprising fluorine rubber, which has a tensile elongation at break of 500% or higher at 170°C and a hardness of 80 or lower at 25°C.

6. The cross-linked fluorine rubber according to claim 5, which has a coefficient of kinetic friction of 2.2 or lower at 170°C.

7. The cross-linked fluorine rubber according to claim 5 or 6, which is obtainable from a fluorine rubber composition containing fluorine rubber, carbon black, at least one compound (A) selected from the group consisting of fatty oils and aliphatic hydrocarbons, and a peroxide cross-linker.

8. The cross-linked fluorine rubber according to claim 7, wherein the fatty oils are each at least one selected from the group consisting of nondrying oils and semidrying oils.

9. The cross-linked fluorine rubber according to claim 7 or 8, wherein the compound (A) is present in an amount of 1 to 30 parts by mass relative to 100 parts by mass of the fluorine rubber.

10. The cross-linked fluorine rubber according to claim 7, 8, or 9, wherein the carbon black is present in an amount of 5 to 65 parts by mass relative to 100 parts by mass of the fluorine rubber.

11. A cross-linked fluorine rubber obtainable from the fluorine rubber composition according to claim 1, 2, 3, or 4.

12. The cross-linked fluorine rubber according to claim 5, 6, 7, 8, 9, 10, or 11, which is a bladder for tire vulcanization.

FIG.1

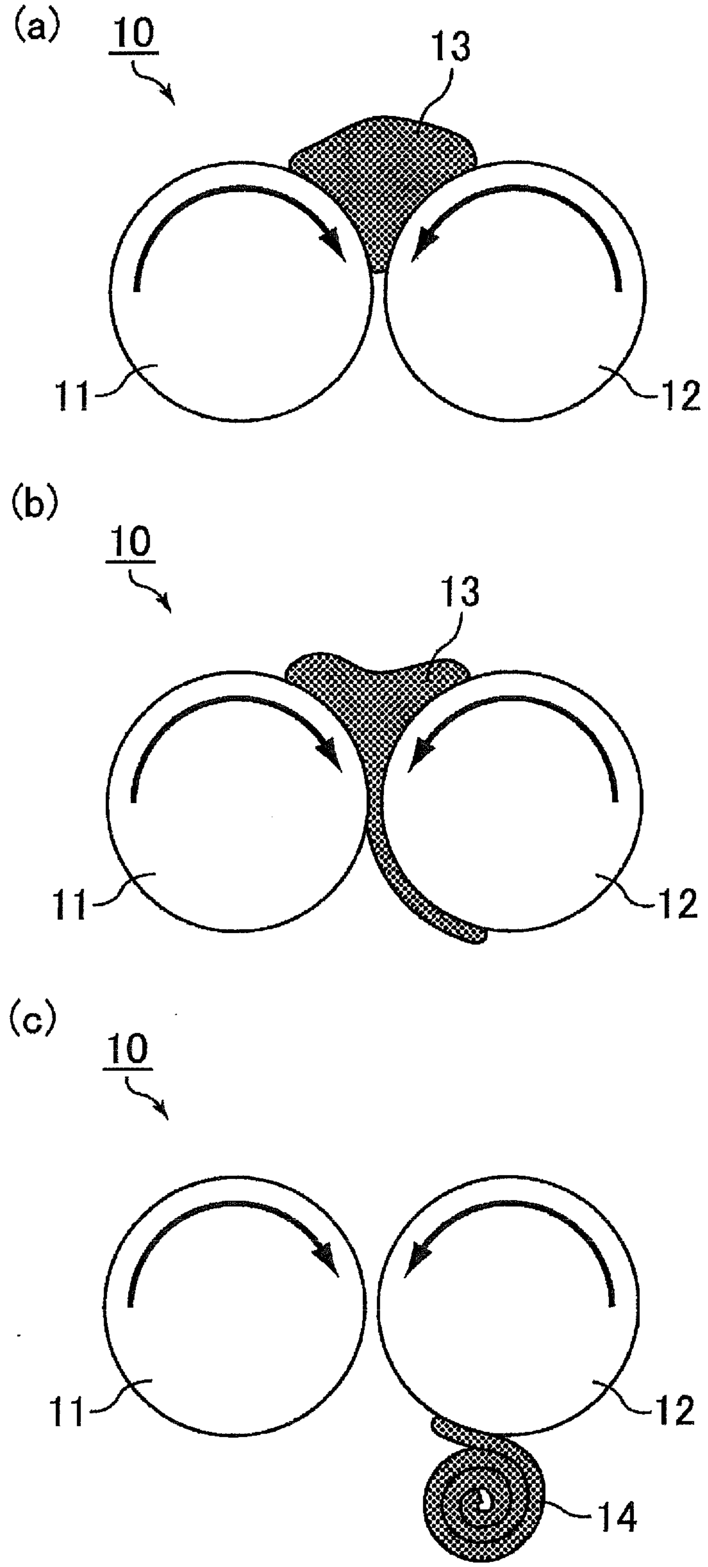

FIG.2

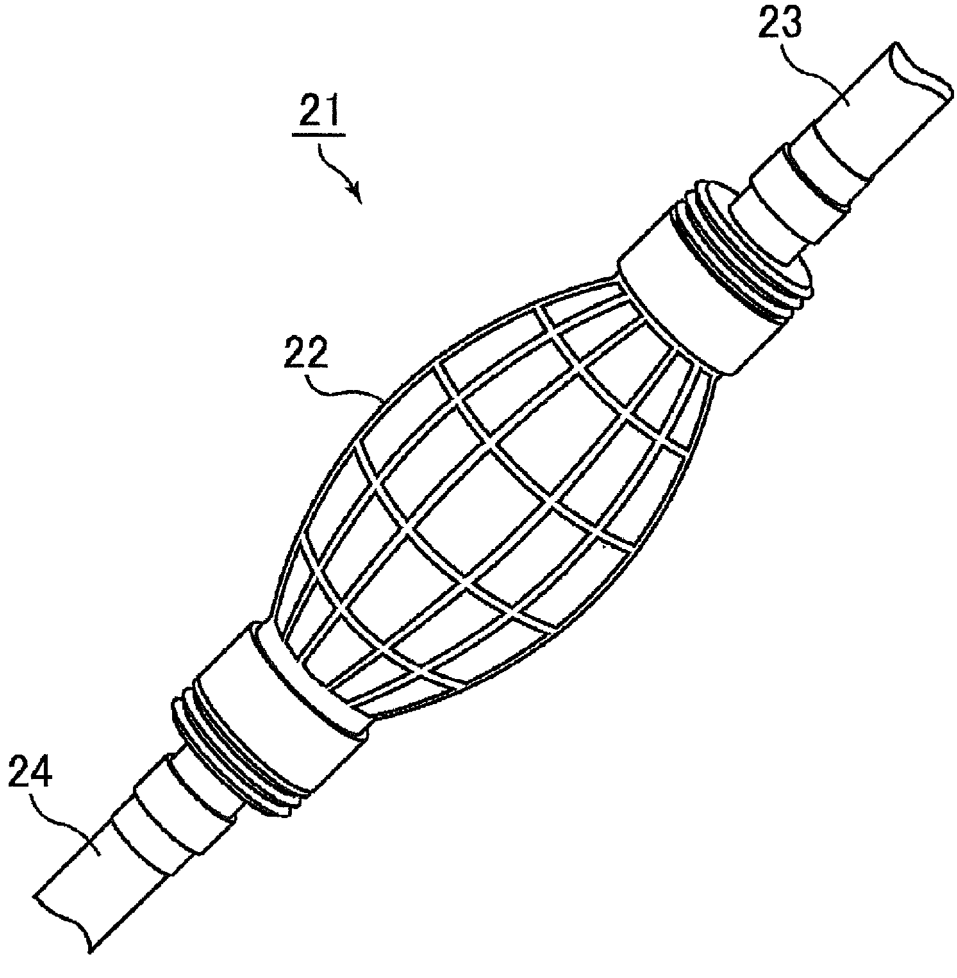

## INTERNATIONAL SEARCH REPORT

International application No.
PCT/JP2015/083472

A. CLASSIFICATION OF SUBJECT MATTER
*C08L27/12*(2006.01)i, *B29C33/00*(2006.01)i, *B29C35/02*(2006.01)i, *C08K3/04*(2006.01)i, *C08K5/14*(2006.01)i, *C08L91/00*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14, B29C33/00-33/76, B29C39/26-39/36, B29C41/38-41/44, B29C43/36-43/42, B29C43/50, B29C45/26-45/44, B29C45/64-45/68, B29C45/73, B29C49/48-49/56, B29C49/70, B29C51/30-51/40, B29C51/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 04-032593 A (Toyo Tire and Rubber Co., Ltd.), 04 February 1992 (04.02.1992), claims; page 3, upper left column, line 19 to upper right column, line 4; page 4, upper right column, line 17 to page 6, lower right column, line 8; table 1 (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 January 2016 (04.01.16) | 19 January 2016 (19.01.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2015/083472

C (Continuation). DOCUMENTS CONSIDERED TO BE RELEVANT

| Category* | Citation of document, with indication, where appropriate, of the relevant passages | Relevant to claim No. |
|---|---|---|
| X | JP 04-165163 A (Toyo Tire and Rubber Co., Ltd.), 10 June 1992 (10.06.1992), claims; page 2, lower right column, line 15 to page 3, upper left column, line 1; page 4, upper right column, lines 7 to 13; page 4, lower left column, line 8 to page 6, lower right column, line 8; table 1 (Family: none) | 1-12 |
| X | JP 03-285984 A (Toyo Tire and Rubber Co., Ltd.), 17 December 1991 (17.12.1991), claims; page 4, lower left column, lines 11 to 18; page 4, lower right column, line 1 to page 7, lower left column, line 1; table 1 (Family: none) | 1-12 |
| A | WO 2012/137724 A1 (NOK Corp.), 11 October 2012 (11.10.2012), entire text & US 9156985 B2 entire text & EP 2682426 A1 | 1-12 |
| A | JP 2004-503608 A (3M Innovative Properties Co.), 05 February 2004 (05.02.2004), entire text & US 2007/0093578 A1 entire text & WO 2002/002690 A1 & EP 1167441 A1 | 1-12 |
| A | JP 2003-013041 A (Mitsubishi Cable Industries, Ltd.), 15 January 2003 (15.01.2003), entire text (Family: none) | 1-12 |
| A | WO 2009/119381 A1 (Daikin Industries, Ltd.), 01 October 2009 (01.10.2009), entire text & US 2011/0021690 A1 entire text & EP 2258768 A1 | 1-12 |
| A | JP 2009-503195 A (3M Innovative Properties Co.), 29 January 2009 (29.01.2009), entire text & US 2007/0027236 A1 entire text & WO 2007/016198 A1 & EP 1907475 A1 | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6055050 A
- JP 2008184496 A
- JP H0625500 A
- WO 2012026554 A